# EUROPEAN PATENT SPECIFICATION

(11) **EP 2 489 917 B1**
(45) Date of publication and mention of the grant of the patent: **17.04.2019**
(21) Application number: 12154205.4
(22) Date of filing: 07.02.2012
(51) Int. Cl.: F16L 39/00, F16L 41/08, B60H 1/00

(54) **Fluid tube assembly**
Fluidrohranordnung
Ensemble de tube de fluide

(30) Priority: 17.02.2011 SE 1150130
(43) Date of publication of application: 22.08.2012
(73) Proprietor: Autotube AB, 432 15 Varberg (SE)
(72) Inventor: Larsson, Jan, 432 95 VARBERG (SE); Börjesson, Jan, 432 96 VARBERG (SE)
(74) Representative: AWA Sweden AB

(56) References cited:
- EP-A2- 0 969 188
- FR-A1- 2 763 287
- JP-A- 2001 208 269
- JP-A- 2008 045 616

## Description

### Field of the Invention

The present invention relates to a fluid tube assembly, comprising a flexible connector member, for simultaneous insertion and attachment of at least two fluid transporting tubes into openings in a body of vehicle engine part, wherein the fluid tube assembly may typically be used to provide cooling fluid and/or lubrication fluid to the vehicle engine part. For example, the vehicle engine part is a turbocharger, supercharger, or similar device, or a part of a vehicle engine cooling system.

The present invention further relates to the use of the fluid tube assembly in a vehicle and the a method for manufacturing a fluid tube assembly comprising a flexible connector member.

### Background Art

Various parts in a vehicle, such as the engine and associated engine parts and devices, may require cooling and/or lubrication in order to function properly. Cooling or lubrication may be achieved by providing or circulating a cooling fluid or a lubrication fluid, such as oil, in the device via tubes, hoses and channels which typically form part of a cooling or lubrication system.

For example, FR2763287 discloses an assembly for simultaneous connection of two tubes on a heat exchanger wherein the adjustment of the distance between the end portions of the tubes is possible by using the elasticity of the connector which is fixedly attached to the tubes.

In order to enable durable and secure connections of inlet and/or outlet tubes to e.g. the body of a vehicle engine part, it is known to connect the fluid conducting tubes via banjo fittings which comprises a hollow bolt with an opening for fluid transfer. The banjo fitting is particularly suitable for high pressure applications and operates well and durable in the surrounding environment of a vehicle engine which typically involves high and varying operating temperatures as well as a considerable amount of vibrations.

For example, FR2891890A describes a banjo coupler which connects a duct to a bore of a turbocharger.

However, for an assembly of tubes which are to be connected to the vehicle engine part, such as a turbocharger, a separate banjo type fitting is required for each tube which is disadvantageous from a manufacturing perspective since the steps of mounting and connecting an assembly of tubes involves separately attaching a banjo fitting for each tube. Furthermore, the banjo fitting is costly and time consuming to manufacture, wherein the bolt of the banjo fitting must be formed via turning or casting and arranged with e.g. a hollow fluid transporting channel, threads, etc. Also, the banjo fitting comprises a number of different parts which may separate and easily come loose during operation and mounting. During automated manufacturing of e.g. vehicles or vehicle parts involving automated mounting of banjo fittings, complex assembly fixtures and arrangements are further required.

To facilitate the mounting, or connection, of the tube, such as a fluid inlet or outlet tube to the vehicle engine part, the tube may be connected by inserting an end portion of the tube in a fluid receiving opening, or bore, in the body of the vehicle engine part. In order to support the tube and to provide a suitable sealing between the tube and fluid receiving opening, the tube is further fixated in relation to the engine vehicle part with a connector member. In order to further improve mounting and reduce the number of step and during mounting, it is desirable to provide simultaneous insertion and fixation of an assembly of fluid tubes, such as an assembly of an inlet tube and an outlet tube. This may be achieved by using one connector member which configured to simultaneously support and fixate two tubes in two separate receiving openings in the body of the vehicle engine part. This solution, however, is disadvantageous in that each tube must be fixated and supported in a very exact positions in relation the each receiving opening. Hence, the mounting of the tube assembly comprising two tubes is time consuming and cumbersome to achieve. The solution is further disadvantageous in that the sealing between each tube and the respective fluid receiving openings are likely to fail due to inaccurate mounting.

It would, therefore, be desirable to achieve a more reliable and durable fluid tube assembly for simultaneous insertion and fixation of at least two fluid transporting tubes into openings in a vehicle engine part.

### Summary of the Invention

In view of the above-mentioned and other drawbacks of the prior art, an object of the present invention is to provide an improved fluid tube assembly which is more reliable and which enable improved, more efficient and failsafe mounting.

According to a first aspect of the present invention as it is defined in claim 1, these and other objects are achieved through a fluid tube assembly for simultaneous insertion of at least two fluid transporting tubes into openings in a vehicle engine part. The fluid tube assembly comprises a first and a second tube for transporting fluid, each having an end portion with an opening facing in a first direction, and a flexible connector member for connecting the first and second tubes to the vehicle engine part, which flexible connector member comprises a support surface arranged to abut the vehicle engine part. The flexible connector member is attached to a first attachment portion of the first tube and to a second attachment portion of the second tube, wherein the flexible connector member supports the end portions of the first and second tubes in a spaced and essentially parallel relationship. Furthermore, the flexible connector member further comprises a first support portion which extends from the first attachment portion , at least partly in the first direction, to the support surface, and a second support portion which extends from the second attachment portion, at least partly in the first direction, to the support surface.

Advantageously, the fluid tube assembly according to the present invention provides for a durable and improved solution for simultaneously connecting and fixating the tubes to fluid receiving opening, or bores, in a vehicle engine part, e.g. a turbo charger, super charger, or similar device, or a vehicle engine part which forms a part of vehicle engine cooling system.

The first and second tubes may advantageously be supported in a relative position with each other by the flexible connector member, which position corresponds to and match the configuration and relative orientation and dimension of the openings in the vehicle engine part body. Furthermore, the fluid tube assembly according to the present invention advantageously enable the first and second tube to move and adjust in relation to the openings, e.g. during insertion, which allows for improved and more reliable sealing between each tube and associated opening. In other words, the fluid tube assembly allow for a self-acting alignment of the first and second tubes in relation to the openings which facilitate mounting and increased operational life since the construction is less sensitive to temperature variations and vibrations. Furthermore, the tolerance and alignment requirements of the tubes in relation to the fluid receiving openings may advantageously be lowered, which allows for cost effective manufacturing and efficient mounting. In particular, the fluid tube assembly may be mounted to a vehicle engine part without separate steps for adjusting the orientation of the end portions of the tube in relation to the openings in the vehicle engine part. Instead, within suitable dimensional tolerances, the fluid tube assembly enable self-alignment of the tubes. In addition, the fluid tube assembly comprises minimized number of components which facilitates cost effective manufacturing and efficient mounting.

The present invention is based on the realization that self-aligning properties of the tubes of the fluid tube assembly may be achieved by providing a fluid tube assembly having a flexible connector member with support portions extending to the attachment portions of the first and second tubes. In particular, the support portions of the flexible member extend between the attachment portion and the support surface of the flexible connector member, thereby providing an axial distance between the attachment portions and the support surface. Hence, the tubes may advantageously move, or adjust, in relation to the openings by flexing of the flexible connector member, wherein the flexible connector member has an advantageous weak design with weaker portions which facilitate flexing.

In particular, the direction of the extension of the support portions and, in relation to the support surface, the axially remotely arranged attachment portions of the fluid tube assembly allow for improved relative movement between the end portions of the tubes in any radial direction of the end portions of the tubes, while relative movement of the tubes in the axial direction is minimized. Hence, the tubes may advantageously adjust and align with the respective openings during mounting in the radial direction, and further be axially secured in the openings such that e.g. proper sealing function is achieved.

The first and second tubes of the fluid tube assembly may advantageously be used as inlet and outlet tubes which may be simultaneously mounted and installed to an engine part, such as a turbocharger of a combustion type engine. Furthermore, the fluid tube assembly provide a prefabricated assembly which advantageously may be mounted using a reduced number of mounting steps.

For example, when mounting of the fluid tube assembly in a fluid transferring relationship with openings in the body, which openings have a different center-to-center distance in relation to the center-to-center distance of the end portions of the first and second tube, the end portions may advantageously be inserted into the opening by applying a gentle force such that the center-to-center distance of the end portion self-adjust in correspondence with the openings by flexing of the flexible connector member. For instance, the support portions of the flexible connector member may flex, or bend, inwardly or outwardly such that the center-to-center distance of the end portions of the first and second tube is reduced or increased, respectively.

According to the present invention, each one of the first and second support portions forms a lever device for enabling adjustment of the distance between the end portions of first and second tubes by flexing of the connector member. Hence, the design of the flexible connecter member facilitate improved flexing properties of the flexible connector member such that the first and second tubes may move in relation to each other and in relation to the openings during mounting. In particular, by providing support portions which operate as levers, less force is needed in order to enable the first and second tubes to self-align in relation to the openings, wherein the lever function strengthen the possibility of the fluid tube assembly to flex and adapt the flexible connector during mounting.

The end portions of the tubes are in an embodiment inserted in openings in a vehicle engine part, such as a turbocharger, supercharger, or vehicle engine cooling system part. Furthermore, the tubes of the fluid tube assembly are used to conduct, or circulate, cooling or lubrication fluid.

According to a further embodiment of the present invention, the fluid tube assembly is connected to the vehicle engine part by removably fastening the flexible connector member to the vehicle engine part. Hence, the fluid tube assembly may be dismantled for service or replacement. For example, the fluid tube assembly is removably attached to vehicle engine part by attaching the flexible connector member to the body of the vehicle engine part with a fastener, such as a screw or bolt, or snap-acting fastener, which facilitate efficient mounting which may be performed manually or automated using simple and reliable mounting fixtures.

According to the invention, each one of the first and second support portions of the flexible connector member is arranged with a respective clearance in relation to the first and second tubes, respectively. In other words, the first support portion is arranged radially outside and separated from the first tube, such that a clearance is formed between the first support portion and the first tube along the extension of the first support portion from the first attachment portion to the support surface. The second support portion is arranged in a corresponding manner in relation to the second tube. Advantageously, the clearance between e.g. the first support portion and the first tube allows for relative movement of the first tube in any radial direction without being restricted or hindered by any part of the flexible connector member. Likewise, the second tube may move in direction towards e.g. the first tube by flexing of the connector member.

For example, the clearance between the one support portion and the adjacent tube is between 0.1 mm and 20 mm, or between 0,2 mm and 10 mm, or between 1 mm and 5 mm.

Furthermore, according to an embodiment, the respective clearance of the first and second support portions, essentially extends from the respective first and second attachment portion to the support surface. Hence, each support member is separated from the respective tube in the first direction from a point defining the end of the respective attachment portion closest to the support surface.

For example, the dimension, typically the diameter, or the radius, of the first and/or second tubes may be between 3 mm and 50 mm, or between 5 mm and 30 mm. Furthermore, the first tube may have a first radial dimension and the second tube may have a second radial dimension which is the same or different from the first radial dimension. In the fluid tube assembly, the distance between the center axis of the end portion of the first tube and the center axis of the end portion of the second tube may e.g. be between 0,5 cm and 10 cm, or between 2 cm and 8 cm.

According to yet an exemplifying embodiment, the flexible connector member comprises a base member which is arranged between the first and second tubes and which base member essentially extends in a radial direction of the first and second tubes, wherein the base member comprises the support surface. In other words, the base member is arranged between the first and second tubes and essentially extend in a direction transverse to the first direction, i.e. typically transverse to the axial direction of the end portions of the first and second tubes. The base member advantageously forms a suitable attachment member for attachment to the vehicle engine part body.

The flexible connector member may further, according to an embodiment of the invention, comprise a first and second fold which are oppositely arranged on respective sides of the base member, and wherein the fluid tube assembly comprises a first clearance between the first fold and the first tube, and a second clearance between the second fold and the second tube. On respective sides, the folds advantageously form weaker portions of the flexible connector member. Furthermore, the first and second support portion may each extend from one fold towards the respective attachment portions. According to a further embodiment, each one of the fold portions of the flexible connector member is essentially flat which improve the flexible, or bending, properties of the folds.

In yet an embodiment, the extension of each one of the first and second support members, in the first direction, is at least one tenth of the distance between the first and second tube, or one fifth of the distance between the first and second tube, or half the distance between the first and second tube. The distance may be the distance between the first and second tube at the first and second attachment portions. Furthermore, the extension of the first support member may e.g. be defined as the distance from the first attachment portion to the support surface, or from the first attachment portion to the bend of the flexible connector member.

According to a further exemplifying embodiment, the flexible connector member is formed of a bended band structure. Hence, the flexible connector member is formed of a continuous piece of material, such as metal or steel, which is bent, or forged, into the intended shape during manufacturing. This provides a durable and reliable flexible connector member.

Furthermore, according to the invention, the flexible connector member is fixedly attached to the first and second tubes at the respective first and second attachment portions. For example, respective end portions of the support portions are attached to the attachment portion of the respective first and second tube, by welding, brazing, soldering, crimping, press fitting, or a corresponding technique. Furthermore, attachment may be provide by adhesive, or via clamps, clips, screws, rivets, or other suitable and durable fasteners.

According to a further embodiment of the present invention, it relates to a vehicle comprising a combustion engine for propelling the vehicle, wherein the vehicle comprises a fluid tube assembly according any one of the above described embodiments. The present invention further relates to the use of a fluid tube assembly to supply cooling fluid or lubrication fluid to the vehicle engine part.

According to another aspect of the present invention as it is defined in claim 12, it relates to a method for manufacturing a fluid tube assembly for simultaneous insertion of at least two fluid transporting tubes into openings in a vehicle engine part, wherein the fluid assembly comprises a first and a second tube for transporting fluid, each tube having an end portion with an opening facing in a first direction. The method comprises forming a flexible connector member for connecting the first and second tube to the vehicle engine part, which connector member comprises a support surface, and fixedly attaching the flexible connector member to a first attachment portion of the first tube and to a second attachment portion of the second tube, such that the flexible connector member supports the end portions of the first and second tubes in a spaced and essentially parallel relationship. The method further comprises providing the flexible connector member with a first support portion which extends from the first attachment portion, at least partly in the first direction, to the support surface, and providing the flexible connector member with a second support portion which extends from the second attachment portion, at least partly in the first direction, to the support surface.

Advantageously, the above method for manufacturing provides a durable fluid tube assembly which entail improved sealing and long term operational properties. Furthermore, the fluid tube assembly which is achieved is cost efficient to manufacture and may be realized with reduced number of parts. The method is further advantageous in that it provides a fluid tube assembly having the advantageous properties as described above in relation to the various embodiments of the fluid tube assembly.

Other objectives, features, and advantages of the present invention will appear from the following detailed disclosure, from the attached dependent claims as well as from the drawings.

### Brief Description of Drawings

These and other aspects of the present invention will now be described in more detail, with reference to the appended drawings showing at least one example embodiment of the invention, wherein:
Fig. 1 is a schematic perspective view of an exemplifying embodiment of the fluid tube assembly according to the present invention, comprising a first and second tube arranged for insertion in openings in a vehicle part body.
Fig. 2 is a schematic cross-sectional view of an exemplifying embodiment of the fluid tube assembly according to the present invention when connected by the flexible connector member to a vehicle part body.
Fig. 3 is a schematic cross-sectional view of an exemplifying embodiment of the fluid tube assembly according to the present invention.
Fig. 4 is a further schematic cross-sectional view of an exemplifying embodiment of the fluid tube assembly according to the present invention.

### Detailed Description of Embodiments of the Invention

In the drawings, similar, or equal elements are referred to by equal reference numerals. The drawings are merely schematic representations, not true to scale and not intended to portray specific parameters of the invention. Furthermore, the drawings are intended to depict only typical embodiments of the invention and therefore should not be considered as limiting the scope of the invention.

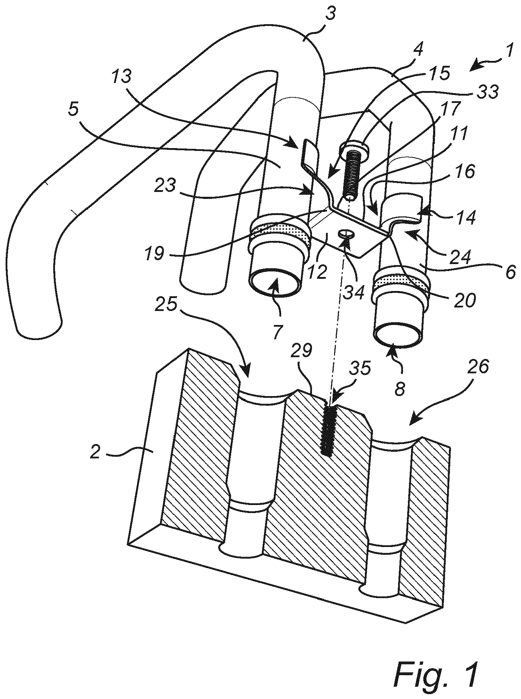

In Fig. 1, a perspective view of the a fluid tube assembly 1 according to an embodiment of the invention, is illustrated. As shown, the fluid tube assembly 1 is arranged for being attached and connected to a body 2, such as the body of a vehicle engine part. In more detail, the fluid tube assembly 1 is arranged for simultaneous insertion of a first 3 and a second 4 tube in a corresponding first 25 and second 26 opening in the body 2. Hence, the first 3 and second 4 tubes may be connected to the body 2 such that transfer of fluid into channels in the body 2 is achieved.

The first 3 and second 4 tubes each comprises a respective end portion 5 and 6, each with a respective opening 7 and 8 facing in a first direction. As illustrated, the end portions 5 and 6 of the tubes are arranged in a parallel and aligned separate configuration in relation to each other, while the additional portions of the first and second tubes are formed into intended shapes in order to fit in confined spaces, such as in the engine housing of a vehicle.

The fluid tube assembly 1 further comprises a flexible connector member 11 which is formed of a at least partly elastic material, such as a suitable metal composition, and which is formed in a suitable shape in order to provide appropriate flexing properties. Typically, the flexible connector member may be formed of any suitable material that enables the flexing design. The material of the flexible connector member may further be heatproof, or hear-resisting, such that is may be utilized with and/or in the proximity of hot engines or engine parts of e.g. an internal combustion engine. For example, the flexible connector member is formed of sheet material of mild steel, high strength steel, stainless steel, aluminum, or combinations of these.

The flexible connector member 11 comprises a support surface 12 which, during e.g. mounting, is facing in the first direction towards the body 2. The support surface 12 of the flexible connector member 11 is arranged to abut a platform 29 of the outer body 2 of the vehicle engine part such that the end portions 5 and 6 with openings 7 and 8 of the fluid tube assembly 1 is inserted to the intended depth into the openings 25 and 26 of body 2. However, the support surface 12 of the connector member is not limited to abut the body 2 directly. Spacers and other types of intermediate elements may be arranged between the connector member 11 and the vehicle engine part, for example in order to protect the body 2, or the adjust the insertion depth of the end portions 5 and 6.

As illustrated, the flexible connector member 11 is fixedly attached to respective attachment portions 13 and 14 of the first and second tubes 3 and 4. In more detail, the flexible connector member 11 comprises a base member 17 from which a first and second support portion 15 and 16 extend. The first support portion 15 extends on a side of the fluid tube assembly 1 adjacent the first tube 3, wherein the first support portion is fixedly attached to the first attachment portion 13 of the first tube 3 at a first axial distance from the support surface 12 of the base member 17. Likewise, the second support portion 16 extends on an opposing side of the fluid tube assembly 1 adjacent the second tube 4, wherein the second support portion is fixedly attached to the second attachment portion 14 of the second tube 4 at a second axial distance from the support surface 12 of the base member 17. In other words, as also illustrated, each one of the support portions 15 and 16 extends at least partly in the first direction, i.e. axially along the tubes 3 and 4 in the direction the openings 7 and 8 are facing, from each respective attachment portions 13 and 14 to the base member 17, or to the support surface 12 of the base member 17. Hence, the support portions 15 and 16 of the flexible connector member 11 forms lever devices which facilitate relative movement, or adjustment, of the end portions 5 and 6 of the first and second tubes 3 and 4 in relation to each other by flexing of the flexible connector member. In other words, the support portions 15 and 16 advantageously increase the flexing property of flexible connector member 11, wherein the length of the first and second axial distances affect the moment, or force, experienced in the flexible connector member 11 when e.g. a relative force is applied to the first and second tubes 3 and 4 in e.g. a radial direction.

As further illustrated in Fig. 1, each end portion 5 and 6 extend, axially in the first direction, beyond the support surface 12 of the flexible connector member 11. Each end portion further comprises sealing members which are arranged on the portion of each tube 3 and 4 which are inserted in the body 2.

Moreover, the fluid tube assembly is arranged to be removably connected to the body 2 of the vehicle engine part. For example, after insertion of the end portions 5 and 6 into openings 25 and 26, the flexible connector member may be secured in position by a screw member 33 arranged to fit through a center opening 34 in the base member 17, and arranged to be screwed into a threaded bore 35 through the platform 29 of the body 2. Hence, the flexible connector member may be securely attached to the body 2 while also allowing suitable flexing.

The fluid tube assembly 1 further comprises a first and second clearance 23 and 24 arranged between the support portions 15 and 16 of the flexible connector member and the respective first and second tubes 3 and 4. In more detail, the first clearance 23 is formed between the first support potion 15 and the first tube 3 and extends from first attachment portion 13 in the first direction. Hence, the first support portion 15 is separated from the first tube 3 from the first attachment portion 13 in a direction towards the support surface 12. In a similar manner, the second clearance is formed between the second support potion 16 and the second tube 4 and extends from second attachment portion 14 in the first direction, wherein the second support portion 16 is separated from the second tube 4 from the second attachment portion 14 in a direction towards the support surface 12.

As illustrated, each clearance 23 and 24 provide an open space between each tube 3 and 4 and the base member 17 of the flexible connector member 11, such that e.g. the first tube 3 may be moved, or adjusted, via flexing of the connector member, a distance equal to the clearance in a direction towards the base member 17 without being blocked, or hindered, by the base member 17.

According to the embodiment illustrated in Fig. 1, the flexible connector member is formed of a bended band structure of sheet metal, wherein a first 19 and second 20 fold are oppositely arranged on respective lateral sides, or lateral ends, of the base member 17. Each fold 19 and 20 is formed of bended flat portion of the band structure, wherein the each fold defines the border, or interface, between the respective first and second support portions 15 and 16 and the base member 17.

By flexing of the flexible connector member 11, in particular, by flexing of the folds 19 and 20 such that the support portions 15 and 16 are tilted, or bent, inwardly or outwardly in relation to the base member 17, the distance between the center lines of the respective end portions 5 and 6 of the first and second tubes 3 and 4 may be reduced or increased. Hence, during mounting of the tube assembly in the openings 25 and 26 in body 2, minor variations in the distance between the center lines of the openings 25 and 26, in relation to an ideal, or intended, distance, do not prevent insertion of the end portions of the first and second tubes 3 and 4. This means that the manufacturing of the fluid tube assembly, or the body 2 of the vehicle engine part, may be performed faster, more efficient, and with reduced waste, since the permitted tolerance in relative orientation of the openings 25 and 26 and the tubes may be increased. In other words, the difference between the upper and lower tolerance limit of the opening 25 and 26 may advantageously be increased without affecting, or preventing, mounting of the fluid tube assembly 1.

The angle of the folds 19 and 20, i.e. the angel between the base member 17 and any one of the first and second support portions 15 and 16, may for example be between 45 and 100 degrees, or between 70 and 95 degrees, or preferably about 90 (+/- 10) degrees, or less than 90 degrees. Furthermore, by providing folds which are formed of a flat portion of the band structure, or a bend with some structure, or curvature, the flexibility of the flexible connector member may be suitable adapted.

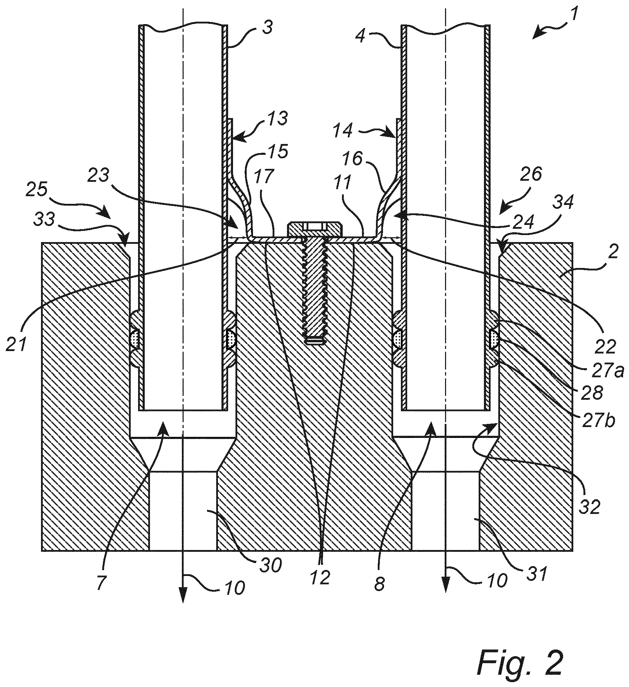

In Fig 2, a schematic cross section view of a fluid tube assembly 1 according to an embodiment of the invention, is illustrated, which fluid tube assembly 1 is formed and arranged as described with reference to the embodiment in Fig. 1, if not stated otherwise. The fluid tube assembly 1 is connected by the flexible connector member 11 to a vehicle body part having a body 2 comprising a first 30 and second 31 channel associated with the first and second openings 25 and 26, respectively.

As shown in Fig. 2, the end portions of the first and second tubes 3 and 4 are inserted, generally simultaneously, into the openings 25 and 26, wherein the flexible connector member is attached to the body 2 via a screw. The end portions are inserted into the opening 25 and 26 in a first direction 10 which coincides with the axial direction of the end portions. Also the openings 7 and 8 of the first and second tubes faces in the first direction 10.

Moreover, each one of the end portions of the first and second tubes 3 and 4 which are inserted into the openings 25 and 26 are further provided with a sealing device. For example, the sealing device of the inserted end portion of the second tube 4 comprises a sealing 28, such as a o-ring seal, or other suitable elastic sealing member. The sealing 28 is arranged circumjacent, and radially outside, the second tube 4, and is further arranged to abut an inner side 32 of the opening 26 such that a sealed fluid transfer between the second tube 4 and the second channel 31 is provided. As further illustrated, the second tube comprises, in relation to the opening 8, an inner 27a and an outer 27b flange, arranged to maintain the sealing 28 in a correct sealing orientation, both during use and during mounting of the fluid tube assembly 1. In particular, the inner and outer flanges 27a and 27b protect the sealing during mounting and also guide the second tube 4 into the right orientation during insertion into the opening 26. The inner and outer flanges 27a and 27b is formed integrally with the second tube 4 and protrudes radially outwards and extend, at least partly, circumjacent the second tube 4. In a similar manner, the end portion of the first tube 3 comprises corresponding sealing device and flanges. The flanges may also be utilized for maintaining the end portions of the tubes in an essentially parallel configuration with each other and with the center lines of the openings. In particular, the inner and outer flange 27a and 27b cooperate via abutment with the inner side 32 such that the tube 4 is aligned. However, by adapting the dimension of the flanges, a center line of the end portion of a tube may be arranged with a small inclination, such a between 0 and 5 degrees, or between 0 and 2 degrees, in relation to the center line of the opening 26.

Each one of the openings 25 and 26 further comprises a respective guide region 33 and 34 which facilitates insertion and mounting of the fluid tube assembly. The guide regions 33 and 34 each has an increased radial dimension which decreases inwardly into the body 2 in the first direction 10. Hence, during mounting, the end portions are guided into the openings 25 and 26 wherein the end portions of the first and second tubes 3 and 4 may move such that the respective distance 21 and 22 between each tube and the adjacent fold of the base member 17 may adjust via self-acting flexing of the flexible connector member.

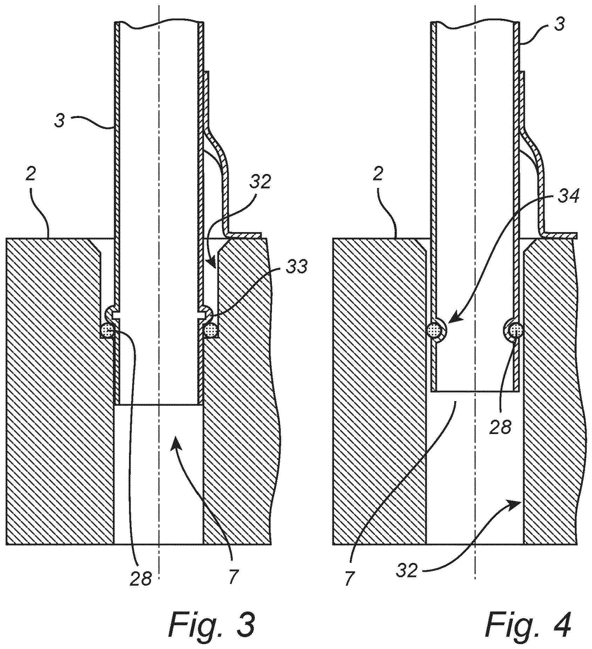

In Fig. 3 and Fig. 4, alternative embodiment designs of the sealing device of the tubes 3 and 4 in relation to the openings in the body 2, are illustrated. As shown, the partially illustrated flexible connector members each comprises an first support portion 15 having a extended flat portion extending in the first direction between the first attachment portion and the base member, which further facilitates flexing of the flexible connector member.

With reference to Fig. 3, the end portion of the tube 3 comprises a sealing 28 which is arranged between a tube flange 33 and a sealing portion of the opening having a reduced diameter in relation to the diameter of the opening. Hence, a suitable fluid seal between the tube 3 and the opening is provided, wherein insertion depth of the end portion and the sealing device of the tube 3 may be adapted to conform with the sealing portion of the opening. Furthermore, the sealing may be pressed against the sealing portion by means of the flexible connector member such that a reliable and durable sealing function is provided.

With reference to the embodiment of the sealing device illustrated in Fig. 4, the end portion of the tube 3 is provided with a sealing device comprising a sealing 28 which is arranged in a circular grove 34 in the tube 3. The grove 34 and sealing 28 is arranged in the opening of the body, wherein the radially outer portion of the sealing 28 abuts the inner side 32 of the opening such that a sealing function is provided around the tube 3. According to this embodiment, a versatile and space efficient solution, is realized.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A fluid tube assembly (1) for simultaneous insertion of at least two fluid transporting tubes into openings in a vehicle engine part (2), comprising
a first (3) and a second (4) tube for transporting fluid, each having an end portion (5, 6) with an opening (7, 8) facing in a first direction (10), and
a flexible connector member (11) for connecting the first and second tubes to the vehicle engine part, which flexible connector member comprises a support surface (12) arranged to abut the vehicle engine part (2),
the flexible connector member (11) being attached to a first attachment portion (13) of the first tube and to a second attachment portion (14) of the second tube, wherein the flexible connector member (11) supports the end portions of the first and second tubes in a spaced and essentially parallel relationship,
wherein the flexible connector member further comprises:
a first support portion (15) which extends from the first attachment portion (13), at least partly in the first direction, to the support surface (12),
a second support portion (16) which extends from the second attachment portion (13), at least partly in the first direction, to the support surface (12),
wherein each one of the first and second support portions (15, 16) forms a lever device for enabling adjustment of the distance between the end portions (5, 6) of first and second tubes by flexing of the flexible connector member (11), and
wherein each one of the first and second support portions (15, 16) of the flexible connector member is arranged with a respective clearance (23, 24) in relation to the first and second tubes (3, 4), respectively, and
wherein the flexible connector member is fixedly attached to the first (3) and second (4) tubes at the respective first (13) and second (14) attachment portions.

2. A fluid tube assembly according to any one of the preceding claims, wherein the end portions (5, 6) of the tubes are inserted in openings in a vehicle engine part (2).

3. A fluid tube assembly according to claim 2, wherein the fluid tube assembly is connected to the vehicle engine part (2) by removably fastening the flexible connector member to the vehicle engine part (2).

4. A fluid tube assembly according to any one of the preceding claims, wherein each clearance (23, 24) of the first and second support portions (15, 16), respectively, essentially extends from the respective first and second attachment portion (13, 14) to the support surface (12).

5. A fluid tube assembly according to any one of the preceding claims, wherein the flexible connector member (11) comprises a base member (17) which is arranged between the first and second tubes (3, 4) and which base member essentially extends in a radial direction of the first and second tubes (3, 4),
wherein the base member (17) comprises the support surface (12).

6. A fluid tube assembly according to claim 5, wherein the flexible connector member comprises a first (19) and second (20) fold which are oppositely arranged on respective sides of the base member (17), and
wherein the fluid tube assembly comprises a first clearance (21) between the first fold (19) and the first tube (3), and a second clearance (22) between the second fold (20) and the second tube (4).

7. A fluid tube assembly according to any one of the preceding claims, wherein the extension of each of the first and second support members (15, 16), in the first direction, is at least one tenth of the distance between the first and second tube, or one fifth of the distance between the first and second tube, or half the distance between the first and second tube.

8. A fluid tube assembly according to any one of the preceding claims, wherein the flexible connector member (11) is formed of a bended band structure.

9. A fluid tube assembly according to any one of the preceding claims, wherein the vehicle engine part is a turbocharger or a part of a vehicle engine cooling system.

10. A vehicle comprising a combustion engine for propelling the vehicle, the vehicle comprising a fluid tube assembly according to any one claims 1-8.

11. Use of a fluid tube assembly (1) according to any one of claims 1-10, which fluid assembly is used to supply cooling fluid or lubrication fluid to the vehicle engine part.

12. Method for manufacturing a fluid tube assembly (1) for simultaneous insertion of at least two fluid transporting tubes into openings in a vehicle engine part (2), wherein the fluid assembly comprises a first (3) and a second (4) tube for transporting fluid, each tube having an end portion (5, 6) with an opening (7, 8) facing in a first direction (10), the method comprising:
forming a flexible connector member for connecting the first and second tube to the vehicle engine part, which connector member comprises a support surface (12),
fixedly attaching the flexible connector member to a first attachment portion (13) of the first tube (3) and to a second attachment portion (14) of the second tube (4), such that the flexible connector member (11) supports the end portions of the first and second tubes in a spaced and essentially parallel relationship,
providing the flexible connector member with a first support portion (15) which extends from the first attachment portion (13), at least partly in the first direction, to the support surface (12),
providing the flexible connector member with a second support portion (16) which extends from the second attachment portion (13), at least partly in the first direction, to the support surface (12),
forming with each one of the first and second support portions (15, 16) a lever device for enabling adjustment of the distance between the end portions (5, 6) of first and second tubes by flexing of the flexible connector member (11), and
arranging each one of the first and second support portions (15, 16) of the flexible connector member with a respective clearance (23, 24) in relation to the first and second tubes (3, 4), respectively.

## Patentansprüche

1. Fluidrohranordnung (1) zum gleichzeitigen Einsetzen von mindestens zwei Fluid transportierenden Rohren in Öffnungen in einem Fahrzeugmotorteil (2), umfassend
ein erstes (3) und ein zweites (4) Rohr zum Transportieren von Fluid, wobei jedes einen Endabschnitt (5, 6) mit einer Öffnung (7, 8) aufweist, die in eine erste Richtung (10) weist, und
ein flexibles Verbindungselement (11) zum Verbinden des ersten und zweiten Rohres mit dem Fahrzeugmotorteil, wobei das flexible Verbindungselement eine Stützfläche (12) umfasst, die so angeordnet ist, dass sie an dem Fahrzeugmotorteil (2) anliegt,
wobei das flexible Verbindungselement (11) an einem ersten Befestigungsabschnitt (13) des ersten Rohres und an einem zweiten Befestigungsabschnitt (14) des zweiten Rohres befestigt ist, wobei das flexible Verbindungselement (11) die Endabschnitte des ersten und zweiten Rohres in beabstandeter und im Wesentlichen paralleler Anordnungsbeziehung stützt,
wobei das flexible Verbindungselement ferner umfasst:
einen ersten Stützabschnitt (15), der sich von dem ersten Befestigungsabschnitt (13) mindestens teilweise in der ersten Richtung zu der Stützfläche (12) erstreckt,
einen zweiten Stützabschnitt (16), der sich von dem zweiten Befestigungsabschnitt (13) mindestens teilweise in der ersten Richtung zu der Stützfläche (12) erstreckt,
wobei jeder des ersten und zweiten Stützabschnitts (15, 16) eine Hebelvorrichtung bildet, um ein Einstellen des Abstands zwischen den Endabschnitten (5, 6) des ersten und zweiten Rohres durch Biegen des flexiblen Verbindungselements (11) zu ermöglichen, und
wobei jeder des ersten und zweiten Stützabschnitts (15, 16) des flexiblen Verbindungselements mit einem jeweiligen Zwischenraum (23, 24) in Bezug auf das erste beziehungsweise zweite Rohr (3, 4) angeordnet ist, und
wobei das flexible Verbindungselement fest an dem ersten (3) und zweiten (4) Rohr an dem jeweiligen ersten (13) und zweiten (14) Befestigungspunkt befestigt ist.

2. Fluidrohranordnung nach einem der vorhergehenden Ansprüche, wobei die Endabschnitte (5, 6) der Rohre in Öffnungen in einem Fahrzeugmotorteil (2) eingesetzt sind.

3. Fluidrohranordnung nach Anspruch 2, wobei die Fluidrohranordnung mit dem Fahrzeugmotorteil (2) durch lösbares Befestigen des flexiblen Verbindungselements an dem Fahrzeugmotorteil (2) verbunden ist.

4. Fluidrohranordnung nach einem der vorhergehenden Ansprüche, wobei sich jeder Zwischenraum (23, 24) des ersten beziehungsweise zweiten Stützabschnitts (15, 16) im Wesentlichen von dem jeweiligen ersten und zweiten Befestigungspunkt (13, 14) zu der Stützfläche (12) erstreckt.

5. Fluidrohranordnung nach einem der vorhergehenden Ansprüche, wobei das flexible Verbindungselement (11) ein Basiselement (17) umfasst, das zwischen dem ersten und zweiten Rohr (3, 4) angeordnet ist und wobei das Basiselement sich im Wesentlichen in einer radialen Richtung des ersten und zweiten Rohres (3, 4) erstreckt,
wobei das Basiselement (17) die Stützfläche (12) umfasst.

6. Fluidrohranordnung nach Anspruch 5, wobei das flexible Verbindungselement eine erste (19) und zweite (20) Abkantung umfasst, die auf jeweiligen Seiten des Basiselements (17) gegenüberliegend angeordnet sind, und
wobei die Fluidrohranordnung einen ersten Zwischenraum (21) zwischen der ersten Abkantung (19) und dem ersten Rohr (3) und einen zweiten Zwischenraum (22) zwischen der zweiten Abkantung (20) und dem zweiten Rohr (4) umfasst.

7. Fluidrohranordnung nach einem der vorhergehenden Ansprüche, wobei die Erstreckung von jedem des ersten und zweiten Stützelements (15, 16) in der ersten Richtung mindestens ein Zehntel des Abstands zwischen dem ersten und zweiten Rohr oder ein Fünftel des Abstands zwischen dem ersten und zweiten Rohr oder die Hälfte des Abstands zwischen dem ersten und zweiten Rohr beträgt.

8. Fluidrohranordnung nach einem der vorhergehenden Ansprüche, wobei das flexible Verbindungselement (11) aus einer gebogenen Bandstruktur gebildet ist.

9. Fluidrohranordnung nach einem der vorhergehenden Ansprüche, wobei das Fahrzeugmotorteil ein Turbolader oder ein Teil eines Fahrzeugmotor-Kühlsystems ist.

10. Fahrzeug, das einen Verbrennungsmotor zum Antreiben des Fahrzeugs umfasst, wobei das Fahrzeug eine Fluidrohranordnung nach einem der Ansprüche 1-8 umfasst.

11. Verwendung einer Fluidrohranordnung (1) nach einem der Ansprüche 1-10, wobei die Fluidanordnung verwendet wird, um dem Fahrzeugmotorteil Kühlfluid oder Schmierfluid zuzuführen.

12. Verfahren zur Herstellung einer Fluidrohranordnung (1) zum gleichzeitigen Einsetzen von mindestens zwei Fluid transportierenden Rohren in Öffnungen in einem Fahrzeugmotorteil (2), wobei die Fluidanordnung ein erstes (3) und ein zweites (4) Rohr zum Transportieren von Fluid umfasst, wobei jedes Rohr einen Endabschnitt (5, 6) mit einer Öffnung (7, 8) aufweist, die in eine erste Richtung (10) weist, wobei das Verfahren umfasst:
Bilden eines flexiblen Verbindungselements zum Verbinden des ersten und zweiten Rohres mit dem Fahrzeugmotorteil, wobei das Verbindungselement eine Stützfläche (12) umfasst,
festes Befestigen des flexiblen Verbindungselements an einem ersten Befestigungsabschnitt (13) des ersten Rohres (3) und an einem zweiten Befestigungsabschnitt (14) des zweiten Rohres (4), sodass das flexible Verbindungselement (11) die Endabschnitte des ersten und zweiten Rohres in beabstandeter und im Wesentlichen paralleler Anordnungsbeziehung stützt,
Versehen des flexiblen Verbindungselements mit einem ersten Stützabschnitt (15), der sich von dem ersten Befestigungsabschnitt (13) mindestens teilweise in der ersten Richtung zu der Stützfläche (12) erstreckt,
Versehen des flexiblen Verbindungselements mit einem zweiten Stützabschnitt (16), der sich von dem zweiten Befestigungsabschnitt (13) mindestens teilweise in der ersten Richtung zu der Stützfläche (12) erstreckt,
Bilden einer Hebelvorrichtung mit jedem des ersten und zweiten Stützabschnitts (15, 16), um ein Einstellen des Abstands zwischen den Endabschnitten (5, 6) des ersten und zweiten Rohres durch Biegen des flexiblen Verbindungselements (11) zu ermöglichen, und
Anordnen von jedem des ersten und zweiten Stützabschnitts (15, 16) des flexiblen Verbindungselements mit einem jeweiligen Zwischenraum (23, 24) in Bezug auf das erste beziehungsweise zweite Rohr (3, 4).

## Revendications

1. Ensemble de tube de fluide (1) pour l'insertion simultanée d'au moins deux tubes de transport de fluide dans des ouvertures d'une pièce de moteur de véhicule (2), comprenant
un premier (3) et un second (4) tubes pour transporter du fluide, dotés chacun d'une section terminale (5, 6) comportant une ouverture (7, 8) tournée dans un premier sens (10), et
un élément connecteur flexible (11) pour connecter les premier et second tubes à la pièce de moteur de véhicule, lequel élément connecteur flexible comprenant une surface support (12) conçue pour buter contre la pièce de moteur de véhicule (2),
l'élément connecteur flexible (11) étant rattaché à une première section de rattachement (13) du premier tube et à une seconde section de rattachement (14) du second tube, l'élément connecteur flexible (11) supportant des sections terminales des premier et second tubes dans une relation espacée et sensiblement parallèle,
l'élément connecteur flexible comprenant en outre :
une première section support (15) qui s'étend depuis la première section de rattachement (13), au moins partiellement dans le premier sens, jusqu'à la surface support (12),
une seconde section support (16) qui s'étend depuis la seconde section de rattachement (13), au moins partiellement dans le premier sens, jusqu'à la surface support (12),
chacune des première et seconde sections supports (15, 16) formant un dispositif de levier pour permettre l'ajustement de la distance entre les sections terminales (5, 6) des premier et second tubes en fléchissant l'élément connecteur flexible (11), et
chacune des première et seconde sections supports (15, 16) de l'élément connecteur flexible étant disposée avec un dégagement respectif (23, 24) respectivement par rapport aux premier et second tubes (3, 4), et
l'élément connecteur flexible étant rattaché fixement aux premier (3) et second (4) tubes au niveau des première (13) et seconde (14) sections de rattachement respectives.

2. Ensemble de tube de fluide selon l'une quelconque des revendications précédentes, dans lequel les sections terminales (5, 6) des tubes sont insérées dans des ouvertures d'une pièce de moteur de véhicule (2).

3. Ensemble de tube de fluide selon la revendication 2, dans lequel l'ensemble de tube de fluide est connecté à la pièce de moteur de véhicule (2) en fixant de manière amovible l'élément connecteur flexible à la pièce de moteur de véhicule (2).

4. Ensemble de tube de fluide selon l'une quelconque des revendications précédentes, dans lequel chaque dégagement (23, 24) respectivement des premières et seconde sections supports (15, 16) s'étend sensiblement depuis les première et seconde sections de rattachement respectives (13, 14) jusqu'à la surface support (12).

5. Ensemble de tube de fluide selon l'une quelconque des revendications précédentes, dans lequel l'élément connecteur flexible (11) comprend un élément de base (17) qui est disposé entre les premier et second tubes (3, 4), lequel élément de base s'étend sensiblement dans un sens radial des premier et second tubes (3, 4),
l'élément de base (17) comprenant la surface support (12).

6. Ensemble de tube de fluide selon la revendication 5, dans lequel l'élément connecteur flexible comprend un premier (19) et un second (20) plis qui sont disposés à l'opposé sur des faces respectives de l'élément de base (17), et
l'ensemble de tube de fluide comprend un premier dégagement (21) entre le premier pli (19) et le premier tube (3), et un second dégagement (22) entre le second pli (20) et le second tube (4).

7. Ensemble de tube de fluide selon l'une quelconque des revendications précédentes, dans lequel l'extension de chacun des premier et second éléments supports (15, 16) dans le premier sens représente au moins un dixième de la distance entre les premier et second tubes, ou un cinquième de la distance entre les premier et second tubes, ou la moitié de la distance entre les premier et second tubes.

8. Ensemble de tube de fluide selon l'une quelconque des revendications précédentes, dans lequel l'élément connecteur de fluide (11) est formé d'une structure en bande courbée.

9. Ensemble de tube de fluide selon l'une quelconque des revendications précédentes, dans lequel la pièce de moteur de véhicule est un turbochargeur ou un système de refroidissement de moteur de véhicule.

10. Véhicule comprenant un moteur à combustion pour propulser le véhicule, ce véhicule comprenant un ensemble de tube de fluide selon l'une quelconque des revendications 1 à 8.

11. Utilisation d'un ensemble de tube de fluide (1) selon l'une quelconque des revendications 1 à 10, lequel ensemble à fluide est utilisé pour fournir du fluide de refroidissement ou du fluide de lubrification à la pièce de moteur de véhicule.

12. Procédé de fabrication d'un ensemble de tube de fluide (1) pour l'insertion simultanée d'au moins deux tubes de transport de fluide dans des ouvertures d'une pièce de moteur de véhicule (2), l'ensemble à fluide comprenant un premier (3) et un second (4) tubes pour transporter du fluide, chaque tube étant doté d'une section terminale (5, 6) comportant une ouverture (7, 8) tournée dans un premier sens (10), ce procédé comprenant
le formage d'un élément connecteur flexible pour connecter les premier et second tubes à la pièce de moteur de véhicule, lequel élément connecteur flexible comprenant une surface support (12),
le rattachement fixe de l'élément connecteur flexible à une première section de rattachement (13) du premier tube (3) et à une seconde section de rattachement (14) du second tube (4), de sorte que l'élément connecteur flexible (11) supporte les sections terminales des premier et second tubes dans une relation espacée et sensiblement parallèle,
l'équipement de l'élément connecteur flexible avec une première section support (15) qui s'étend depuis la première section de rattachement (13), au moins partiellement dans le premier sens, jusqu'à la surface support (12),
l'équipement de l'élément connecteur flexible avec une seconde section support (16) qui s'étend depuis la seconde section de rattachement (13), au moins partiellement dans le premier sens, jusqu'à la surface support (12),
le formage, avec chacune des première et seconde sections supports (15, 16), d'un dispositif de levier pour permettre l'ajustement de la distance entre les sections terminales (5, 6) des premier et second tubes en fléchissant l'élément connecteur flexible (11), et
la disposition de chacune des première et seconde sections supports (15,16) de l'élément connecteur flexible avec un dégagement respectif (23, 24) respectivement par rapport aux premier et second tubes (3, 4).
